# EUROPÄISCHE PATENTSCHRIFT

(11) **EP 3 645 448 B1**
(45) Veröffentlichungstag und Bekanntmachung des Hinweises auf die Patenterteilung: **25.10.2023**
(21) Anmeldenummer: 18719517.7
(22) Anmeldetag: 19.04.2018
(51) Int. Cl.: B67C 3/00, B67C 3/06, B67C 7/00

(54) **VERFAHREN ZUR DICHTHEITSKONTROLLE EINER FÜLL-VERSCHLIESS-EINHEIT FÜR BEHÄLTER UND FÜLL-VERSCHLIESSMASCHINE**
METHOD FOR TIGHTNESS CONTROL OF A FILLING-SEALING UNIT FOR CONTAINERS, AND FILLING-SEALING MACHINE
PROCÉDÉ DE CONTRÔLE D'ÉTANCHÉITÉ D'UNE UNITÉ DE REMPLISSAGE ET DE FERMETURE POUR RÉCIPIENT ET MACHINE DE REMPLISSAGE ET DE FERMETURE

(30) Priorität: 28.06.2017 DE 102017210949
(43) Veröffentlichungstag der Anmeldung: 06.05.2020
(73) Patentinhaber: Krones AG, 93073 Neutraubling (DE)
(72) Erfinder: KNOTT, Josef, 93073 Neutraubling (DE); HABERSETZER, Florian, 93073 Neutraubling (DE)
(74) Vertreter: Grünecker Patent- und Rechtsanwälte PartG mbB
(86) Internationale Anmeldenummer: PCT/EP2018/060013
(87) Internationale Veröffentlichungsnummer: WO 2019/001794

(56) Entgegenhaltungen:
- EP-A1- 3 064 468
- DE-A1-102014 104 873
- GB-A- 2 112 735
- US-B1- 6 230 472

## Beschreibung

Die Erfindung betrifft ein Verfahren zur Dichtheitskontrolle einer Füll-Verschließ-Einheit gemäß Oberbegriff des Anspruchs 1 sowie eine Füllmaschine.

Aus der DE 10 2014 104 872 A1 ist ein Verfahren zum Befüllen von Behältern und aus der DE 10 2014 104 873 A1 ein darauf basierendes Verfahren zum Befüllen und Verschließen von Behältern mit einem unter Druck stehenden und insbesondere karbonisierten Getränk bekannt. Dabei wird das Getränk in einen evakuierten Behälter gefüllt und anschließend unter Überdruck verschlossen. Der Mündungsbereich der Behälter befindet sich beim Befüllen und Verschließen in einer Druckkammer, wobei beim Füllen zunächst ein Produktzulauf abdichtend auf den Mündungsbereich gefahren und nach dem Füllen wieder zurückgefahren wird. Danach wird ein mit einem Verschluss bestückter Verschließer in der Druckkammer auf den Mündungsbereich abgesenkt und der Behälter dadurch verschlossen.

Zwischen Füllen und Verschließen der Behälter wird die Druckkammer mit CO₂ beaufschlagt, sodass in der Druckkammer im Wesentlichen derselbe Überdruck herrscht wie im gefüllten Behältern. Dadurch wird ein Druckabfall beim Wegfahren des Produktzulaufs vom Mündungsbereich des Behälters vermieden. Der Verschließer wird in der mit CO₂ beaufschlagten Kammer auf den Behälter abgesenkt, so dass das abgefüllte Produkt nach dem Verschließen des Behälters und Entlasten der Druckkammer unter CO₂-Atmosphäre steht.

Die in der Druckkammer beweglichen Komponenten, nämlich der Produktzulauf und der Verschließer, werden jeweils mittels Dichtungen gegenüber der Druckkammer gasdicht und flüssigkeitsdicht bezogen auf die beim Befüllen nötigen Überdrücke und Unterdrücke abgedichtet. Ferner ist der Mündungsbereich der Behälter zur Wand der Druckkammer hin von einer weiteren Dichtung gasdicht und flüssigkeitsdicht abgedichtet. Zu diesem Zweck kann diese Dichtung mehrteilig ausgebildet sein und sich beispielsweise zangenförmig um den in die Druckkammer eingeführten Mündungsbereich des Behälters legen.

Für eine ordnungsgemäße Abfüllung CO₂-haltiger Produkte in die Behälter ist eine CO₂-Beaufschlagung der Druckkammer mit einem vorgegebenen Überdruck unerlässlich. Dadurch wird vermieden, dass der CO₂-Partialdruck über dem Produkt unter den jeweiligen Sättigungsdruck sinkt und das Produkt überschäumt.

Hierfür ist eine korrekte Funktion der oben genannten Dichtungen erforderlich. Zwar lassen sich die Druckverhältnisse in der Druckkammer prinzipiell mittels Drucksensoren überwachen und so eine ordnungsgemäße CO₂-Beaufschlagung insgesamt feststellen.

Problematisch ist jedoch, dass sich beispielsweise bei einem Druckabfall in der Druckkammer bisher nicht ohne weiteres feststellen lässt, welche Dichtung dafür verantwortlich ist. Die dann nötige Inspektion sämtlicher in Frage kommender Dichtungen verursacht einen unerwünschten Zeitaufwand.

Aus der EP 3 064 468 A1 sind Dichtigkeitstests bekannt, die sowohl an Fülleinheiten, die an einem Karussell montiert sind, durchgeführt werden können als auch an Fülleinheiten, die demontiert in einem Testaufbau überprüft werden. Hierfür werden verschiedene Sensoren und Auswerteeinheiten vorgeschlagen, die entweder an den am Karussell montierten Einheiten angebracht werden können oder in Laboraufbauten zum Einsatz kommen. In diesem Zusammenhang werden auch Testflaschen oder dergleichen Testkörper beschrieben.

Aus der GB 2 112 735 A ist zudem ein allgemeiner Bedarf für Drucktests an Füllmaschinen bei angesetzten Behältern bekannt.

Es besteht daher Bedarf für ein vereinfachtes Verfahren zur Dichtheitskontrolle derartiger Füll-Verschließ-Einheiten und für entsprechend kontrollierbare Füll-Verschließ-Maschinen.

Die gestellte Aufgabe wird mit einem Verfahren gemäß Anspruch 1 gelöst. Demnach dient dieses zur Dichtheitskontrolle einer Füll-Verschließ-Einheit für Behälter, wobei eine an der Füll-Verschließ-Einheit ausgebildete Druckkammer um einen darin beweglichen Verschließer mit einer ersten Dichtung und um einen darin beweglichen Produktzulauf mit einer zweiten Dichtung abgedichtet ist. Erfindungsgemäß dichtet man eine zum Abdichten der Druckkammer um einen Mündungsbereich, Halsbereich und/oder Schulterbereich des Behälters ausgebildete dritte Dichtung mit einem Aufsatz vorübergehend von außen ab. Ferner erzeugt man einen Überdruck und/oder Unterdruck in der Druckkammer, verschließt die dafür verwendete Druckleitung und misst danach einen Druckverlauf in der Druckkammer.

Die Abdichtfunktion der dritten Dichtung wird währenddessen vom abdichtenden Aufsatz ersetzt, so dass eine unzulässige Abweichung des gemessenen Druckverlaufs von einem vorgegebenen Druckverlauf auf einen Defekt an der ersten und/oder zweiten Dichtung schließen lässt. Der vorgegebene Druckverlauf ist hierbei insbesondere ein zulässiger Druckabfall gegenüber einem in der Druckkammer erzeugten Überdruck und/oder ein zulässiger Druckanstieg gegenüber einem in der Druckkammer erzeugten Unterdruck.

Erfindungsgemäß wird die Funktion der dritten Dichtung und des eingesetzten Behälters temporär durch den abdichtenden Aufsatz ersetzt. Die dritte Dichtung wird zur Abdichtung des Mündungsbereichs, Halsbereichs und/oder Schulterbereichs eines zuvor eingeführten Behälters zudem mit Druckluft beaufschlagt, um den Mündungsbereich, Halsbereich und/oder Schulterbereich des Behälters flüssigkeitsdicht und gasdicht bezogen auf die im Arbeitsbetrieb herrschenden Überdrücke und/oder Unterdrücke von der dritten Dichtung zu umschließen.

Ferner wird der Druckverlauf bei Überdruck und/oder Unterdruck gemessen, während der Verschließer von einer Ruheposition in eine Schließposition bewegt wird und/oder in entgegengesetzter Richtung. Damit ist es wahrscheinlicher, einen Druckverlust an der ersten Dichtung zu provozieren als bei ruhendem Verschließer. Ebenso lässt sich eine festgestellte Undichtigkeit dann besser der ersten oder zweiten Dichtung zuordnen.

Vorzugsweise wird der Druckverlauf bei Überdruck und/oder Unterdruck gemessen, während der Produktzulauf von einer Ruheposition in eine Füllposition bewegt wird und/oder in entgegengesetzter Richtung. Damit ist es wahrscheinlicher, einen Druckverlust an der zweiten Dichtung zu provozieren als bei ruhendem Produktzulauf. Ebenso lässt sich eine festgestellte Undichtigkeit dann besser der ersten oder zweiten Dichtung zuordnen.

Die erste Dichtung kann auch als Verschließerdichtung bezeichnet werden. Die zweite Dichtung kann auch als Produktzulaufdichtung bezeichnet werden. Die dritte Dichtung kann auch als Behälterdichtung bezeichnet werden.

Der Druckverlauf in der Druckkammer wird beispielsweise mit einem Drucksensor gemessen und von einer Steuerung der Füll-Verschließ-Einheit oder dergleichen Recheneinheit registriert.

Der Aufsatz ist beispielsweise ein CIP-Aufsatz, der die Druckkammer ferner für ein sogenanntes Cleaning-In-Place (CIP) flüssigkeitsdicht abdichtet. Der Aufsatz wird derart von außen auf ein die Druckkammer umschließendes Gehäuse der Füll-Verschließ-Einheit gasdicht aufgesetzt, dass die dritte Dichtung innerhalb des Aufsatzes liegt und folglich keine Abdichtfunktion hat.

Vorzugsweise entfernt man ferner den Aufsatz und führt einen Behälter mit seinem Mündungsbereich, Halsbereich und/oder Schulterbereich in die dritte Dichtung ein. Die dritte Dichtung wird zu diesem Zweck vorzugsweise in ihrem Dichtungssitz mit Druckluft aufgeblasen. Auch andere Druckfluide sind denkbar, beispielsweise eine Flüssigkeit. Ferner erzeugt man einen Überdruck und/oder Unterdruck in der Druckkammer, schließt die dafür verwendete Druckleitung und misst danach einen Druckverlauf in der Druckkammer. Im Vergleich zu einem ordnungsgemäßen Druckverlauf mit abdichtendem Aufsatz lässt eine unzulässige Abweichung des Druckverlaufs von einem vorgegebenen Druckverlauf bei eingeführtem Behälter auf eine Fehlfunktion der dritten Dichtung schließen.

Alternativ oder ergänzend entfernt man vorzugsweise den Aufsatz und führt einen den Mündungsbereich, einen Halsbereich und/oder einen Schulterbereich der Behälter simulierenden Testkörper in die dritte Dichtung ein. Ferner erzeugt man einen Überdruck und/oder Unterdruck in der Druckkammer, schließt die dafür verwendete Druckleitung und misst danach einen Druckverlauf in der Druckkammer. Auch dadurch lässt sich im Vergleich zu einem ordnungsgemäßen Druckverlaufs mit abdichtendem Aufsatz eine Fehlfunktion der dritten Dichtung erkennen, falls der mit eingeführtem Testkörper gemessene Druckverlauf von einem vorgegebenen Druckverlauf unzulässig abweicht. Der Testkörper dichtet die Druckkammer zu diesem Zweck mit einer ordnungsgemäß funktionierenden dritten Dichtung nach unten hin gasdicht ab.

Mit Testkörpern lassen sich bestimmte Eigenschaften und/oder Maß-/Formabweichungen der Behälter gezielt simulieren, beispielsweise eine in der Praxis auftretende Abweichung von einem ideal runden Querschnitt. Auch lässt sich abschätzen, bei welchen Maß-/Formabweichungen eine korrekte Funktion der dritten Dichtung beispielsweise in deren Neuzustand und/oder nach bestimmten Einsatzzeiten noch gegeben ist.

Vorzugsweise wird in der Druckkammer ein Überdruck von wenigstens 1 bar erzeugt, insbesondere von wenigstens 3 bar. So lassen sich die für ein ordnungsgemäßes Vorspannen der Drucckammer beim Abfüllen und Verschließen erforderlichen Druckverhältnisse simulieren.

Vorzugsweise wird der Überdruck durch Einleiten von CO₂ erzeugt. CO₂ eignet sich als Spanngas für das Befüllen und Verschließen der Behälter im besonderen Maße, insbesondere beim Abfüllen CO₂-haltiger Produkte, insbesondere Getränke. Die Dichtheitskontrolle kann somit unter Produktionsbedingungen durchgeführt werden.

Vorzugsweise wird ein Unterdruck von 0,3 bar oder weniger erzeugt, insbesondere von höchstens 0,1 bar. Dadurch lässt sich die Dichtigkeit der Dichtungen für die beim Evakuieren der Behälter üblichen Unterdrücke kontrollieren.

Vorzugsweise werden die Dichtigkeitskontrollen mit einem höheren Überdruck und/oder niedrigeren Unterdruck durchgeführt als die im normalen Betrieb verwendeten Überdrücke / Unterdrücke, in der Regel zumindest einschließlich der Obergrenzen / Untergrenzen der jeweiligen Druckspezifikationen für den Produktionsbetrieb.

Vorzugsweise misst man den Druckverlauf in der Druckkammer jeweils über einen Zeitraum von wenigstens 1 s, insbesondere wenigstens 5 s. Damit lassen sich zuverlässige Aussagen über die Dichtheit der zu überprüfenden Dichtungen treffen, gegebenenfalls auch zum Feststellen einer bevorstehenden Undichtigkeit beispielsweise im Rahmen einer Trendanalyse.

Vorzugsweise führt man die Dichtheitskontrolle an sämtlichen Füll-Verschließ-Einheiten einer Füll-Verschließ-Maschine aus. Die Füll-Verschließ-Maschine ist vorzugsweise eine Rundläufermaschine mit einer Vielzahl umfänglich gleichmäßig angeordneten Füll-Verschließ-Einheiten. Dies ermöglicht eine umfassende Funktionskontrolle der Füll-Verschließ-Maschine.

Vorzugsweise wird die Dichtheitskontrolle pro Füll-Verschließ-Einheit wenigstens zweimal hintereinander mit unterschiedlichen Behältern ausgeführt. Darunter ist insbesondere zu verstehen, dass die Füll-Verschließ-Maschine wenigstens zwei vollständige Umdrehungen mit Behälterzufuhr und Dichtheitskontrolle für jede Füll-Verschließ-Einheit ausführt. Dadurch lässt sich die Aussagekraft der Dichtheitskontrolle einzelner Füll-Verschließ-Einheiten erhöhen, insbesondere unter Berücksichtigung von Herstellungstoleranzen am Mündungsbereich und/oder Schulterbereich der Behälter.

Vorzugsweise werden die Füll-Verschließ-Einheiten bei Nichtbestehen der Dichtheitskontrolle jeweils an eine Instandhaltungsstelle der Füllmaschine gefahren. Die betroffenen Füll-Verschließ-Einheiten können dort von Personal nacheinander instand gesetzt werden.

Vorzugsweise wird die Dichtheitskontrolle mittels der Behälter bei einer gegenüber normalem Produktionsbetrieb reduzierten Drehzahl der Füll-Verschließ-Maschine durchgeführt. Dadurch kann Druckverlauf länger überwacht werden als bei normaler Drehzahl. Dies erhöht die Aussagekraft der Dichtheitskontrolle vor allem bei kleinen und/oder langsamen Abweichungen des Druckverlaufs, beispielsweise um eine drohende oder unmittelbar bevorstehende Undichtheit festzustellen.

Vorzugsweise wird die Dichtheitskontrolle mittels der Behälter bei einer für den Produktionsbetrieb vorgesehenen Drehzahl der Füll-Verschließ-Maschine durchgeführt. Dies ermöglicht eine besonders praxisnahe Dichtheitskontrolle.

Alternativ oder ergänzend kann die Dichtheitskontrolle mit den Behältern im Stillstand der Füllmaschine durchgeführt werden. Damit kann der Druckverlauf in der Druckkammer beispielsweise über einen von der Drehzahl unabhängigen Zeitraum und/oder unter speziellen Testbedingungen, wie beispielsweise zur Überprüfung bestimmter Druckspezifikationen, gemessen werden.

Vorzugsweise wird die Dichtheitskontrolle im und/oder zwischen dem laufenden Produktionsbetrieb mehrfach ausgeführt und wenigstens eine darauf basierende Trendanalyse für die auf die Dichtheit kontrollierten Füll-Verschließ-Einheiten erstellt. Dadurch kann auch aus geringfügigen Änderungen des Druckverlaufs in der Druckkammer für einzelne Füll-Verschließ-Einheiten auf eine drohende Fehlfunktion einzelner Dichtungen und der jeweiligen Füll-Verschließ-Einheit insgesamt geschlossen werden.

Für eine besonders aussagekräftige Auswertung der Druckmessung wird vorzugsweise ein zeitlicher Verlauf des Überdrucks / Unterdrucks in der Druckkammer überwacht und ausgewertet, im Gegensatz zu einem einfachen Druckvergleich mit einem Schwellwert oder dergleichen.

Ordnungsgemäße Druckverläufe werden vorzugsweise empirisch ermittelt. Ausgehend davon können Warnschwellenwerte und/oder Stoppschwellenwerte festgelegt werden, insbesondere zulässige Maximalwerte für den Unterdruck und zulässige Minimalwerte für den Überdruck. Derartige Schwellenwerte könnten beispielsweise 20% oberhalb bzw. unterhalb des ordnungsgemä-βen Druckverlaufs liegen. Bildlich gesprochen kann auf diese Weise ein zeitlicher Korridor vorgegeben werden, innerhalb dessen sich die Druckmesswerte befinden müssen.

Die Druckmesswerte werden vorzugsweise für jede Füll-Verschließ-Einheit im Sinne einer individuellen Inspektionshistorie gespeichert. In bestimmten zeitlichen Abständen, beispielsweise wöchentlich, oder in anderweitig definierter Abfolge gemessene Druckverläufe können dann miteinander verglichen werden. Ergibt sich daraus beispielsweise ein individueller Trend zu einem zunehmenden Druckverlust / Druckanstieg im Druckverlauf, so kann man daraus auf ein schleichend voranschreitendes Dichtungsversagen schließen. Dieses lässt sich somit vorausschauend abschätzen, um zu geeigneter Zeit entsprechende Instandsetzungsmaßnahmen an der betroffenen Füll-Verschließ-Einheit einzuleiten.

Vorzugsweise wird ein CIP-Mittel vor der Dichtheitskontrolle durch die mit dem Aufsatz abgedichtete Füll-Verschließ-Einheit geleitet. Das CIP-Mittel ermöglicht eine Reinigung der Füll-Verschließ-Einheit ohne ihr Abbauen und/oder Zerlegen. Zudem kann bei der anschließenden Dichtheitskontrolle ausgeschlossen werden, dass ein unzulässiger Druckverlauf durch Verschmutzungen verursacht wird.

Die gestellte Aufgabe wird ebenso mit einer Füllmaschine gemäß Anspruch 14 gelöst.

Die Füll-Verschließ-Einheiten umfassen demnach jeweils: eine Druckkammer; einen jeweils darin beweglichen und zu einem die Druckkammer umgebenden Gehäuse jeweils mittels einer ersten und zweiten Dichtung abgedichteten Verschließer und Produktzulauf; und eine in einem unteren Teilabschnitt des Gehäuses sitzende dritte Dichtung, die zur Aufnahme und Abdichtung eines Mündungsbereichs und/oder eines daran anschließenden Halsbereichs und/oder daran anschließenden Schulterbereichs eines Behälters mit Druckluft beaufschlagt werden kann.

Unter anderem ist die Steuerung der Füllmaschine dazu ausgebildet, eine zugeordnete Überdruckquelle und/oder eine zugeordnete Unterdruckquelle sowie Ventile zum Öffnen und Schlie-βen von Druckleitungen und Spülleitungen in zeitlich geeigneter Abfolge zu steuern.

Die Füllmaschine umfasst ferner wenigstens einen Aufsatz, welcher temporär auf dem unteren Teilabschnitt des Gehäuses um einen darin ausgebildeten Dichtungssitz für die dritte Dichtung abdichtend befestigt werden kann, um die Funktion der dritten Dichtung und des eingesetzten Behälters zu ersetzen

Die Steuerung ist vorzugsweise dazu ausgebildet, die Füll-Verschließ-Maschine mit geeigneter Drehzahl anzutreiben und Behälter und/oder geeignete Testkörper in den Füll-Verschließ-Einheiten zu positionieren. Die Steuerung ist dann vorzugsweise dazu ausgebildet, Dichtheitskontrollen mit den abdichtenden Aufsätzen und bei eingeführtem Behälter oder Testkörper mit jeder der zu kontrollierenden Füll-Verschließ-Einheiten zu steuern.

Bevorzugte Ausführungsformen der Erfindung sind in den Zeichnungen dargestellt. Es zeigen:
- Fig. 1: einen schematischen Längsschnitt durch eine Füll-Verschließ-Einheit mit einem Behälter;
- Fig. 2: eine schematische Darstellung der Füll-Verschließ-Einheit mit zugehörigen Medienleitungen;
- Fig. 3: eine schematische Draufsicht auf eine Füll-Verschließ-Maschine;
- Fig. 4: einen Ablaufplan des Verfahrens mit Varianten der Drucküberwachung; und
- Fig. 5: eine schematische Darstellung eines gemessenen Druckverlaufs.

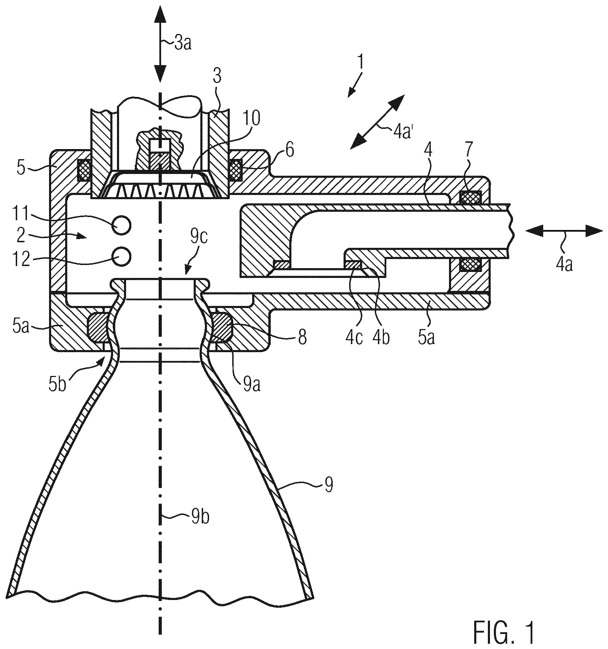

Wie die Fig. 1 erkennen lässt, umfasst die Füll-Verschließ-Einheit 1 gemäß einer bevorzugten Ausführungsform eine Druckkammer 2, einen in dieser beweglichen Verschließer 3 und einen in der Druckkammer 2 beweglichen Produktzulauf 4. Der Produktzulauf 4 und der Verschließer 3 sind bekanntermaßen für eine Betätigung von ihren Ruhepositionen in eine Füllposition bzw. Schließposition nacheinander ausgebildet.

Der Verschließer 3 ist zu einem die Druckkammer 2 umgebenden Gehäuse 5 der Füll-Verschließ-Einheit 1 mit einer ersten Dichtung 6 abgedichtet. Die erste Dichtung 6 ist beispielsweise eine Lippendichtung. Der Produktzulauf 4 ist zum Gehäuse 5 mit einer zweiten Dichtung 7 abgedichtet. Die zweite Dichtung 7 ist beispielsweise eine gummivorgespannte Kunststoffdichtung.

In einem unteren Teilabschnitt 5a des Gehäuses 5 sitzt ferner eine dritte Dichtung 8, die zur Aufnahme und Abdichtung eines Mündungsbereichs 9a und/oder eines daran anschließenden Halsbereichs und/oder daran anschließenden Schulterbereichs eines mit einem flüssigen Produkt zu füllenden und zu verschließenden Behälters 9 ausgebildet ist. Die dritte Dichtung 8 ist vorzugsweise als elastischer Torus ausgebildet und beispielsweise aus einem geeigneten Kunststoff gefertigt. Die dritte Dichtung 8 kann zur Abdichtung des Mündungsbereichs 9a, Halsbereichs und/oder Schulterbereichs mit Druckluft beaufschlagt werden. Dadurch kann der Mündungsbereich 9a, Halsbereich und/oder Schulterbereich des Behälters 9 flüssigkeitsdicht und gasdicht bezogen auf die im Arbeitsbetrieb herrschenden Überdrücke und/oder Unterdrücke von der dritten Dichtung 8 umschlossen werden.

Der untere Teilabschnitt 5a des Gehäuses 5 umfasst einen Dichtungssitz 5b für die dritte Dichtung 8, wobei der Dichtungssitz 5b zangenförmig ausgebildet sein kann mit einer Teilungsebene, die beispielsweise mit der Zeichnungsebene der Fig. 1 zusammenfällt. Dadurch lässt sich der untere Teilabschnitt 5a des Gehäuses 5 entlang der Teilungsebene öffnen und nach Positionieren des Behälters 9 wieder schließen.

Die erste Dichtung 6 und die zweite Dichtung 7 dichten die Druckkammer 2 in den verschiedenen Arbeitsstellungen des Verschließers 3 und des Produktzulaufs 4 gasdicht und flüssigkeitsdicht bezogen auf die im Arbeitsbetrieb der Füll-Verschließ-Einheit 1 in der Vakuumkammer 2 herrschenden Überdrücke und/oder Unterdrücke ab.

Dabei erlaubt die erste Dichtung 6 eine Hubbewegung 3a des Verschließers 3 im Wesentlichen koaxial zur Mittelachse 9b des Behälters 9 bis in eine Schließposition, um die Mündung 9c des Behälters 9 mit einem Verschluss 10, beispielsweise einem Kronkorken, dicht zu verschließen.

Ferner erlaubt die zweite Dichtung 7 eine Linearbewegung 4a des Produktzulaufs 4 bis in eine Füllposition, um eine Auslauföffnung 4b des Produktzulaufs 4 auf dem Mündungsbereich 9a des Behälters 9 vorzugsweise selbstzentrierend um die Mündung 9c zu platzieren. Für ein gasdichtes und flüssigkeitsdichtes Aufsetzen der Auslauföffnung 4b kann um diese beispielsweise eine vierte Dichtung 4c ausgebildet sein.

Lediglich schematisch angedeutet ist in der Fig. 1, dass sich der Produktzulauf 4 auch in einer alternativen Linearbewegung 4a' schräg zur Hubrichtung 3a des Verschließers 3 auf den Mündungsbereich 9a aufsetzen ließe. Auch in diesem Fall wäre die Auslauföffnung 4b orthogonal zur Mittelachse 9b auszurichten.

Als weitere Alternative wäre auch ein Schwenkmechanismus für den Produktzulauf 4 denkbar, um diesen auf dem Mündungsbereich 9a aufzusetzen, sofern eine Abdichtung mittels der zweiten Dichtung 7 gegenüber dem Gehäuse 5 und ein anschließendes Absenken des Verschließers 3 auf den Mündungsbereich 9a gegeben ist.

In der Fig. 1 sind ferner schematisch eine erste Druckleitung 11 zum Einleiten eines Spanngases, insbesondere CO₂, mit einem Überdruck in die Druckkammer 2 und eine zweite Druckleitung 12 zum Erzeugen eines Unterdrucks in der Druckkammer 2 schematisch angedeutet. Die erste Druckleitung 11 kann auch als Spanngasleitung bezeichnet werden, die zweite Druckleitung 12 kann auch als Vakuumleitung bezeichnet werden.

Ein Reinigungsmittel zum Reinigen der Füll-Verschließ-Einheit 1 im Ganzen (CIP) lässt sich über unterschiedliche Produkt-, Spanngas- und/oder Vakuumleitungen auf an sich bekannte Weise einleiten, also ohne Zerlegen oder Abbauen der Füll-Verschließ-Einheit 1.

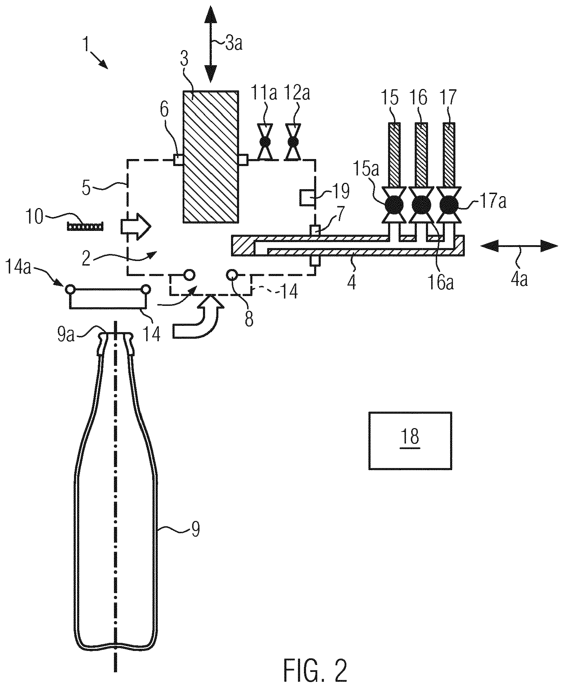

Die Lage der Druckleitungen 11, 12 in der Druckkammer 2 ist unerheblich, sofern die nachfolgend beschriebene Erzeugung von Überdruck und/oder Unterdruck in der Druckkammer 2 und/oder das Beaufschlagen mit einem Reinigungsmittel gegeben sind. Prinzipiell können Überdruck und/oder Unterdruck in der Druckkammer 2 auch durch den Produktzulauf 4 und daran angeschlossene Medienleitungen erzeugt werden, siehe beispielsweise die Fig. 2.

Die Fig. 2 verdeutlicht Bestandteile der Füll-Verschließ-Einheit 1 im Zusammenhang mit einer an sich bekannten Medienführung durch den Produktzulauf 4 und im Zusammenhang mit einem Aufsatz 14 zum gasdichten Abdecken der dritten Dichtung 8 nach außen hin.

Der Aufsatz 14 kann temporär auf dem unteren Teilabschnitt 5a des Gehäuses 5 um den darin ausgebildeten Dichtungssitz 5b abdichtend befestigt werden.

Der Aufsatz 14 ist beispielsweise eine CIP-Abdeckung für den Dichtungssitz 5b und die dritte Dichtung 8. Der Aufsatz 14 kann beispielsweise für einen CIP-Prozess gasdicht und flüssigkeitsdicht befestigt werden, so dass der Bereich des Dichtungssitzes 5b unabhängig von der Funktion und strukturellen Integrität der dritten Dichtung 8 abgedichtet ist. Zu diesem Zweck ist an dem Aufsatz 14 beispielsweise eine fünfte Dichtung 14a vorhanden.

Der Produktzulauf 4 kann bekanntermaßen mit einer Produktleitung 15, mit einer Spanngasleitung 16 und mit einer Vakuumleitung 17 mittels getrennt steuerbarer Ventile 15a, 16a, 17a selektiv verbunden werden.

Ebenso schematisch angedeutet sind Ventile 11a, 12a zum gesteuerten und selektiven Öffnen und Schließen der ersten und zweiten Druckleitung 11, 12.

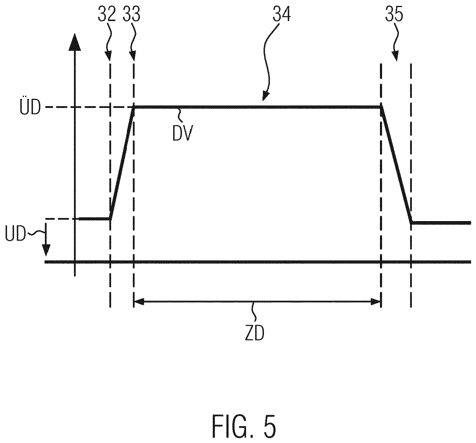

Für die zeitlich koordinierte Betätigung der Ventile 11a, 12a und 15a bis 17a ist beispielsweise eine Steuerung 18 vorhanden, die auch zur Registrierung von Messwerten eines schematisch angedeuteten Drucksensors 19 verwendet werden kann, um Druckverläufe DV (siehe Fig. 5) in der Druckkammer 2 zu überwachen.

Die erste und zweite Dichtung 6, 7 dichten bei ordnungsgemäßer Funktion die Bereiche des Verschließers 3 und des Produktzulaufs 4 unabhängig von deren Stellungen flüssigkeitsdicht und gasdicht bei den im normalen Arbeitsbetrieb der Füll-Verschließ-Einheit 1 vorkommenden Drücken ab. Selbiges gilt für die dritte Dichtung 8 bei eingesetztem Behälter 9.

Der Erfindung liegt der Gedanke zugrunde, die Funktion der dritten Dichtung 8 und des eingesetzten Behälters 9 temporär durch den abdichtenden Aufsatz 14 zu ersetzen und wenigstens in dieser Konfiguration einen Druckverlauf DV in der Druckkammer 2 nach Erzeugung eines vorgegebenen Überdrucks ÜD und/oder Unterdrucks UD außerhalb des Produktionsbetriebs zu messen (siehe Fig. 5).

Dies ist beispielsweise im Rahmen einer Reinigung im Ganzen (CIP) besonders effizient möglich. Derart gemessene Druckverläufe DV können dann mit im normalen Produktionsbetrieb und/oder in zusätzlichen Dichtheitskontrollen mit den Behältern 9 und/oder geeigneten Testkörpern (nicht dargestellt) gemessenen Druckwerten und/oder Druckverläufen DV verglichen werden. Dadurch lassen sich gegebenenfalls festgestellte Undichtheiten jeweils den ersten und zweiten Dichtungen 6, 7 zuordnen oder der dritten Dichtung 8.

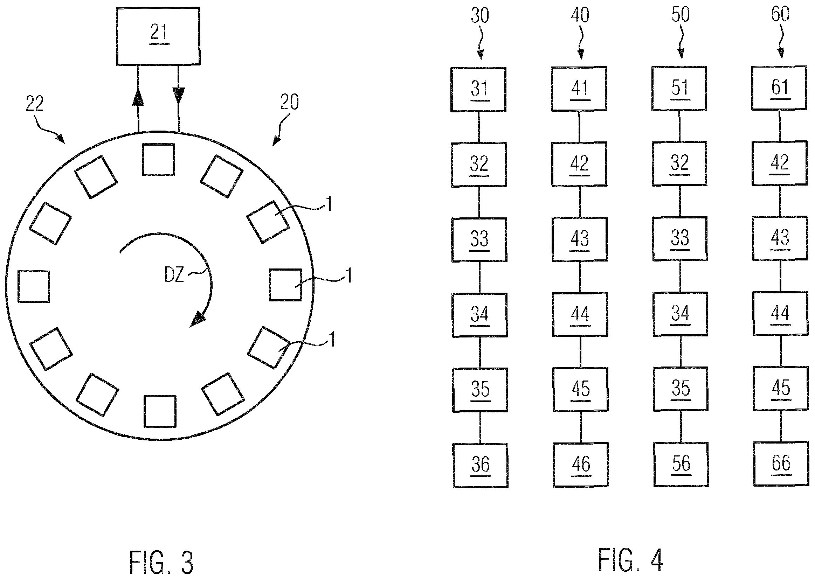

Zu diesem Zweck werden vorzugsweise sämtliche an einer in der Fig. 3 schematisch angedeuteten Füll-Verschließ-Maschine 20 umlaufender Bauart vorhandenen Füll-Verschließ-Einheiten 1 an einen CIP-Reinigungskreis 21 angeschlossen. Hierbei erfolgt der Zufluss des Reinigungsmittels beispielsweise über eine geeignete Produkt-, Spanngas- und/oder Vakuumleitung und der Abfluss durch den Aufsatz 14 (nicht dargestellt) oder anderweitig. Die CIP-Reinigung wird bei rotierender Füll-Verschließ-Maschine 20 vorzugsweise gleichzeitig an sämtlichen Füll-Verschließ-Einheiten 1 durchgeführt.

Einzelne Dichtheitskontrollen 30, 40, 50, 60 an den Füll-Verschließ-Einheiten 1 sind nachfolgend unter Bezugnahme auf die Ablaufdiagramme der Fig. 4 beschrieben.

Demnach wird eine Dichtheitskontrolle 30 mit dem Aufsatz 14 bei Beaufschlagung der Druckkammer 2 mit einem Überdruck ÜD wie folgt durchgeführt.

In einem Schritt 31 wird der Aufsatz 14, beispielsweise im Rahmen einer Reinigung der Füll-Verschließ-Einheit 1 im Ganzen (CIP), am unteren Abschnitt 5a des Gehäuses 5 um den Dichtungssitz 5b befestigt und die Druckkammer 2 dort während der Dichtheitskontrolle 30 gegenüber der Umgebung gasdicht abgedichtet.

In einem anschließenden Schritt 32 wird die erste Druckleitung 11 beispielsweise durch Öffnen des Ventils 11a geöffnet und ein Spanngas in die Druckkammer 2 geleitet. Diese wird dadurch vorzugsweise wenigstens mit dem im normalen Arbeitsbetrieb der Füll-Verschließ-Einheit verwendeten Spanngasdruck beaufschlagt, beispielsweise mit einem Überdruck ÜD von wenigstens 1 bar, insbesondere von wenigstens 3 bar. Als Spanngas wird vorzugsweise CO₂ verwendet, das üblicherweise auch im regulären Arbeitsbetrieb als Spanngas dient. Dies ermöglicht eine praxisnahe Dichtheitskontrolle der ersten und zweiten Dichtung 6, 7. Denkbar wäre aber auch die Verwendung von Druckluft oder dergleichen.

In einem anschließenden Schritt 33 wird die Zufuhr des Spanngases durch Schließen der ersten Druckleitung 11, beispielsweise mittels des Ventils 11a, unterbrochen. Bei ordnungsgemäßer Funktion der ersten und zweiten Dichtung 6, 7 sollte der in der Druckkammer 2 erzeugte Überdruck ÜD danach für eine geeignete Überwachungsdauer von beispielsweise 1 bis 10 s im Wesentlichen konstant bleiben.

In einem anschließenden Schritt 34 wird der Druckverlauf DV in der Druckkammer 2, beispielsweise mit Hilfe des Drucksensors 19 und der Steuereinheit 18 oder dergleichen Recheneinheit, über eine vorgegebene Zeitdauer ZD (siehe Fig. 5) von beispielsweise 1 bis 10 s überwacht. Vom Drucksensor 19 dabei gemessene Druckwerte werden für die weitere Auswertung gespeichert.

In einem anschließenden Schritt 35 wird die Druckkammer 2 auf geeignete Weise entspannt, beispielsweise durch kurzzeitiges Öffnen eines Unterdruckventils 12a, 16a.

In einem anschließenden Schritt 36 wird in der im Schritt 34 gemessene Druckverlauf DV auf Ordnungsmäßigkeit überprüft. Wird ein unzulässiger Druckabfall festgestellt, so kann die Ursache dafür, je nach Ausmaß des Druckabfalls, gegebenenfalls bereits der ersten Dichtung 6 und/oder der zweiten Dichtung 7 zugeordnet werden, da die Funktion der dritten Dichtung 8 zuvor vom Aufsatz 14 ersetzt wurde. Obwohl eine Fehlfunktion der dritten Dichtung 8 allein auf dieser Grundlage noch nicht ausgeschlossen werden kann, könnten dennoch eine Instandsetzung oder weitere Dichtheitskontrollen 40, 50 gezielt eingeleitet werden.

Ergänzend oder alternativ wird eine im Prinzip analog ablaufende Dichtheitskontrolle 40 mit dem Aufsatz 14 bei Beaufschlagung der Druckkammer 2 mit einem Unterdruck UD wie folgt durchgeführt.

Zu diesem Zweck wird der Aufsatz 14 in einem Schritt 41 analog zum Schritt 31 angebracht oder verbleibt nach der Dichtheitskontrolle 30 an seiner abdichtenden Position.

In einem anschließenden Schritt 42 wird die Druckkammer 2, beispielsweise durch Öffnen des Ventils 12a, mit der zweiten Druckleitung 12 verbunden und dadurch bis zu einem Unterdruck UD von beispielsweise 0,5 bis 0,05 bar evakuiert.

In einem anschließenden Schritt 43 wird die zweite Druckleitung 12, beispielsweise durch Schlie-βen des Ventils 12a verschlossen. Bei ordnungsgemäßer Funktion der ersten Dichtung 6 und der zweiten Dichtung 7 sollte der in der Druckkammer 2 auf diese Weise erzeugte Unterdruck UD danach für eine geeignete Überwachungsdauer von beispielsweise 1 bis 10 s im Wesentlichen konstant bleiben.

In einem anschließenden Schritt 44 wird der Druckverlauf DV in der Druckkammer 2 ausgehend von dem in Schritt 43 erzeugten Unterdruck UD über eine vorgegebene Zeitdauer ZD von beispielsweise 1 bis 10 s überwacht. Der Druckverlauf DV wird beispielsweise mit dem Drucksensor 19 gemessen und zugehörige Druckwerte an die Steuereinheit 18 oder der gleichen Recheneinheit übermittelt und dort gespeichert.

In einem anschließenden Schritt 45 kann die Druckkammer 2 auf geeignete Weise wieder auf Umgebungsdruck gebracht werden, beispielsweise durch kurzzeitiges Öffnen eines Überdruckventils 11a, 15a.

In einem anschließenden Schritt 46 wird in der im Schritt 44 gemessene Druckverlauf DV auf Ordnungsmäßigkeit überprüft. Wird ein unzulässiger Druckanstieg festgestellt, so kann die Ursache dafür, je nach Ausmaß des Druckanstiegs, gegebenenfalls bereits der ersten Dichtung 6 und/oder der zweiten Dichtung 7 zugeordnet werden, da die Funktion der dritten Dichtung 8 zuvor vom Aufsatz 14 ersetzt wurde. Obwohl eine Fehlfunktion der dritten Dichtung 8 allein auf dieser Grundlage noch nicht ausgeschlossen werden kann, können dennoch Instandhaltungsmaßnahmen oder weitere Dichtheitskontrollen 30, 50 gegebenenfalls gezielt eingeleitet werden.

Dichtheitskontrollen 30, 40 mit den Aufsätzen 14 werden vorzugsweise an jeder der an der Füll-Verschließ-Maschine 20 vorhandenen Füll-Verschließ-Einheiten 1 durchgeführt. Dies ist parallel an allen Füll-Verschließ-Einheiten 1 möglich. Die mit den jeweiligen Drucksensoren 19 gemessenen Druckwerte können auf bekannte Weise ausgelesen und an die Steuereinheit 18 oder der gleichen Recheneinheit zur Auswertung übermittelt werden.

Vorzugsweise wird ergänzend eine im Prinzip analog ablaufende Dichtheitskontrolle 50 jeder Füll-Verschließ-Einheit 1 ohne den Aufsatz 14 und stattdessen mit einem in der dritten Dichtung 8 sitzenden Behälter 9 bei Beaufschlagung der Druckkammer 2 mit einem Überdruck ÜD wie folgt durchgeführt.

In einem Schritt 51 wird jeder Füll-Verschließ-Einheit 1 ein Behälter 9 zugeführt und sein Mündungsbereich 9a von der dritten Dichtung 8 aufgenommen und dabei beispielsweise durch Beaufschlagung mit Druckluft fest umschlossen.

Anschließend werden die Schritte 32 bis 35 ausgeführt.

In einem Schritt 56 wird der im vorangegangenen Schritt 34 gemessene Druckverlauf DV auf Ordnungsmäßigkeit überprüft. Wird ein unzulässiger Druckabfall festgestellt, so kann die Ursache, insbesondere bei ordnungsgemäßem Druckverlauf DV der vergleichbaren Dichtheitskontrolle 30 und je nach Ausmaß des Druckabfalls, gegebenenfalls bereits der dritten Dichtung 8 zugeordnet werden. Eine Fehlfunktion der dritten Dichtung 8 kann zuverlässig im Vergleich mit der ebenfalls mittels des Aufsatzes 14 durchgeführten Dichtheitskontrolle 30 festgestellt oder ausgeschlossen werden. Folglich kann eine Instandsetzung gegebenenfalls gezielt eingeleitet und schnell durchgeführt werden.

Vorzugsweise wird ergänzend eine im Prinzip analog ablaufende Dichtheitskontrolle 60 jeder Füll-Verschließ-Einheit 1 ohne den Aufsatz 14 und mit einem in der dritten Dichtung 8 sitzenden Behälter 9 bei Beaufschlagung der Druckkammer 2 mit einem Unterdruck UD wie folgt durchgeführt.

In einem Schritt 61 wird jeder Füll-Verschließ-Einheit 1 ein Behälter 9 zugeführt und sein Mündungsbereich 9a von der dritten Dichtung 8 aufgenommen und dabei beispielsweise durch Beaufschlagung mit Druckluft fest umschlossen.

Anschließend werden die Schritte 42 bis 45 ausgeführt.

In einem Schritt 66 wird der im vorangegangenen Schritt 44 gemessene Druckverlauf DV auf Ordnungsmäßigkeit überprüft. Wird ein unzulässiger Druckanstieg festgestellt, so kann die Ursache, insbesondere bei ordnungsgemäßem Druckverlauf DV der vergleichbaren Dichtheitskontrolle 40 und je nach Ausmaß des Druckanstiegs, gegebenenfalls bereits der dritten Dichtung 8 zugeordnet werden. Eine Fehlfunktion der dritten Dichtung 8 kann zuverlässig im Vergleich mit der ebenfalls mittels des Aufsatzes 14 durchgeführten Dichtheitskontrolle 40 festgestellt oder ausgeschlossen werden. Folglich kann eine Instandsetzung gegebenenfalls gezielt eingeleitet und schnell durchgeführt werden.

Die Schritte 32 bis 34 und 42 bis 44 können mit den Behältern 9 prinzipiell bei aufgesetztem oder nicht aufgesetztem Produktzulauf 4 durchgeführt werden, also unter Einbeziehung oder Ausschluss des Behältervolumens.

Die Schritte 32 bis 34 und 42 bis 44 könnten auch mit Hilfe der Spanngasleitung 15 und dem Ventil 15a bzw. mit der Vakuumleitung 16 und dem Ventil 16a durchgeführt werden.

Die Dichtheitskontrollen 50, 60 mit den eingesetzten Behältern 9 können in Form von Testläufen der Füll-Verschließ-Maschine 20 mit einer gegenüber dem Normalbetrieb reduzierter Drehzahl DZ (siehe Figur 3) durchgeführt werden, um die Überwachung des Druckverlaufs DV auf geeignete Weise zu verlängern. Ebenso sind besonders praxisnahe Dichtheitskontrollen 50, 60 bei der im Produktionsbetrieb verwendeten Drehzahl DZ möglich.

Die Testläufe umfassen vorzugsweise jeweils wenigstens zwei Umläufe sämtlicher Füll-Verschließ-Einheiten 1, so dass deren Dichtheitskontrollen 50, 60 jeweils mit wenigstens zwei unterschiedlichen Behältern 9 durchgeführt werden. Dadurch lassen sich Fehlerquellen aufgrund von Herstellungstoleranzen der Behälter 9 berücksichtigen.

Separate Testläufe zur Dichtheitskontrolle 50, 60 der Füll-Verschließ-Einheiten 1 mit Behältern 9 können zielgerichtet an die Erfordernisse für aussagekräftige Messungen der in der Druckkammer 2 erzeugten Druckverläufe DV optimiert werden.

Es ist auch denkbar, die Dichtheitskontrollen 50, 60 mit den eingesetzten Behältern 9 in einen normalen Füll-Verschließ-Prozess des Produktionsbetriebs zu integrieren. Beispielsweise kann das Spanngas, insbesondere CO₂, zum Austreiben von Sauerstoff aus den Behältern 9 vor der Abfüllung bis auf einen vorgegebenen Überdruck ÜD in die Behälter 9 und in die Druckkammer 2 eingefüllt werden. Eine Überwachung des Druckverlaufs DV in der Druckkammer 2 ist dabei zumindest über eine vergleichsweise kurze Zeitdauer ZD möglich.

Die Dichtheitskontrollen 30, 40 mit den Aufsätzen 14 kann man in geeigneten Kontrollintervallen, Reinigungsintervallen oder bei einem Verdacht auf Undichtheit aufgrund der im regulären Produktionsbetrieb gemessenen Druckverläufe DV durchführen.

Die dritte Dichtung 3 ist aufgrund ihrer geteilten Bauweise und der Beanspruchung beim Aufnehmen und Abdichten der Behälter 9 vergleichsweise empfindlich. Eine separate Dichtheitskontrolle 30, 40 der ersten und zweiten Dichtung 6, 7 mit dem Aufsatz 14 begünstigt die schnelle Zuordnung von Undichtheiten und einen rechtzeitigen Dichtungsaustausch.

Erfüllt eine der kontrollierten Füll-Verschließ-Einheiten 1 die Anforderungen an die Druckverläufe DV bei Überdruck ÜD und/oder Unterdruck DU bei aufgesetztem Aufsatz 14 und/oder bei eingeführtem Behälter 9 nicht, so wird die betroffene Füll-Verschließ-Einheit 1 vorzugsweise an eine geeignete Instandhaltungsstelle 22 der Füll-Verschließ-Maschine 20 gefahren. Dort kann die betroffene Füll-Verschließ-Einheit 1 beispielsweise durch Austausch der nicht ordnungsgemäß arbeitenden Dichtungen 6, 7, 8 gezielt instandgesetzt werden. Vorzugsweise werden alle als nicht ordnungsgemäß abgedichtet erkannten Füll-Verschließ-Einheiten 1 nacheinander an die Instandhaltungsstelle 22 zur jeweiligen Instandsetzung gefahren.

Die Dichtheitskontrollen 50, 60 mit den eingesetzten Behältern 9 können regelmäßig in vorgegebenen Kontrollintervallen in den laufenden Produktionsbetrieb integriert werden. Werden bestehende oder drohende Undichtigkeiten an einzelnen Füll-Verschließ-Einheiten 1 festgestellt, so können Dichtheitskontrollen 30, 40 mit dem Aufsatz 14 beispielsweise im Rahmen einer Reinigung im Ganzen (CIP) mit geringem apparativen und zeitlichen Aufwand durchgeführt werden.

Die Ergebnisse sämtlicher Dichtheitskontrollen 30, 40, 50, 60 können in Trendanalysen einflie-βen, um die Funktion der Dichtungen 6, 7, 8 langfristig zu überwachen und beispielsweise einer drohenden Fehlfunktion der Füll-Verschließ-Einheiten 1 durch Instandsetzung zuvorzukommen. Beispielsweise können die Druckverläufe DV einzelner Füll-Verschließ-Einheiten 1 aus jeweils gleichartigen Dichtheitskontrollen 30, 40, 50, 60 miteinander verglichen werden. Eine Zunahme der jeweils registrierten Druckabfälle bzw. Druckanstiege deutet dann auf eine sich verschlechternde Funktion der ersten und zweiten Dichtungen 6, 7 oder der dritten Dichtung 8 hin.

Alternativ zu den Behältern 9 könnten Testkörper (nicht dargestellt) zur Eliminierung oder Simulation bestimmter Herstellungstoleranzen der Behälter 9 für die Dichtheitskontrollen 50, 60 eingesetzt werden. Somit lässt sich auch die Dichtheitskontrolle 50, 60 selbst hinsichtlich ihrer Aussagekraft und Zuverlässigkeit überprüfen und gegebenenfalls optimieren.

Die Figur 5 verdeutlicht schematisch den Schritt 34, nämlich eine Überwachung des Druckverlaufs DV in der Druckkammer 2 über eine Zeitdauer ZD nach Erzeugung eines Überdrucks ÜD. Schematisch angedeutet sind ferner die oben beschriebenen Schritte 32, 33 und 35. Zum besseren Verständnis ist ferner ein Unterdruck DU angedeutet, dessen Verlauf im Schritt 44 (in der Fig. 5 nicht dargestellt) auf entsprechende Weise überwacht würde.

## Patentansprüche

1. Verfahren zur Dichtheitskontrolle (30, 40, 50, 60) einer Füll-Verschließ-Einheit (1) für Behälter (9), wobei eine an der Füll-Verschließ-Einheit (1) ausgebildete Druckkammer (2) zu einem darin beweglichen Verschließer (3) hin mit einer ersten Dichtung (6) und zu einem Produktzulauf (4) hin mit einer zweiten Dichtung (7) abgedichtet ist, **dadurch gekennzeichnet, dass** man eine zum Abdichten der Druckkammer (2) um einen Mündungsbereich (9a) und/oder Halsbereich und/oder Schulterbereich der Behälter (9) ausgebildete dritte Dichtung (8) mit einem Aufsatz (14) vorübergehend von außen abdichtet und dadurch die Funktion der dritten Dichtung (8) und eines eingesetzten Behälters (9) temporär durch den abdichtenden Aufsatz (14) ersetzt, einen Überdruck und/oder Unterdruck in der Druckkammer (2) erzeugt, die dafür verwendete Druckleitung (11, 12) schließt, und danach einen Druckverlauf (DV) in der Druckkammer (2) misst, und dass man ferner einen Behälter (9) mit seinem Mündungsbereich (9a), Halsbereich und/oder Schulterbereich in die dritte Dichtung (8) einführt, diese mit Druckluft beaufschlagt, um den Mündungsbereich / Halsbereich / Schulterbereich flüssigkeitsdicht und gasdicht bezogen auf im Arbeitsbetrieb herrschende Überdrücke und/oder Unterdrücke mit der dritten Dichtung (8) zu umschließen, dann einen Überdruck und/oder Unterdruck in der Druckkammer (2) erzeugt, die dafür verwendete Druckleitung (11, 12) schließt und danach erneut einen Druckverlauf (DV) in der Druckkammer (2) misst.

2. Verfahren nach Anspruch 1, wobei man ferner einen den Mündungsbereich (9a), Halsbereich und/oder Schulterbereich der Behälter (9) simulierenden Testkörper in die dritte Dichtung (8) einführt, einen Überdruck und/oder Unterdruck in der Druckkammer (2) erzeugt, die dafür verwendete Druckleitung (11, 12) schließt, und danach einen Druckverlauf in der Druckkammer (2) misst.

3. Verfahren nach einem der vorigen Ansprüche, wobei ein Überdruck (ÜD) von wenigstens 1 bar erzeugt wird, insbesondere von wenigstens 3 bar.

4. Verfahren nach einem der vorigen Ansprüche, wobei der Überdruck (ÜD) durch Einleiten von CO₂ erzeugt wird.

5. Verfahren nach einem der vorigen Ansprüche, wobei ein Unterdruck (UD) von 0,1 bar oder weniger erzeugt wird.

6. Verfahren nach einem der vorigen Ansprüche, wobei man den Druckverlauf (DV) jeweils über eine Zeitdauer (ZD) von wenigstens 0,5 s, insbesondere von wenigstens 5 s, misst.

7. Verfahren nach wenigstens einem der vorigen Ansprüche, wobei die Dichtheitskontrolle (30, 40, 50, 60) an sämtlichen Füll-Verschließ-Einheiten (1) einer Füll-Verschließ-Maschine (20) umlaufender Bauart ausgeführt wird.

8. Verfahren nach Anspruch 7, wobei die Dichtheitskontrolle (50, 60) pro Füll-Verschließ-Einheit (1) wenigstens zweimal hintereinander mit unterschiedlichen Behältern (9) ausgeführt wird.

9. Verfahren nach Anspruch 7 oder 8, wobei die Füll-Verschließ-Einheiten (1) bei Nichtbestehen der Dichtheitskontrolle (30, 40, 50, 60) jeweils an eine Instandhaltungsstelle (22) der Füllmaschine (20) gefahren werden.

10. Verfahren nach einem der Ansprüche 7 bis 9, wobei die Dichtheitskontrolle (50, 60) mit den Behältern (9) bei einer für den Produktionsbetrieb vorgesehenen maximalen Drehzahl (DZ) der Füllmaschine (20) durchgeführt wird.

11. Verfahren nach einem der Ansprüche 7 bis 10, wobei die Dichtheitskontrolle (50, 60) mit den Behältern (9) bei einer gegenüber normalem Produktionsbetrieb reduzierten Drehzahl (DZ) und/oder im Stillstand der Füllmaschine (20) durchgeführt wird.

12. Verfahren nach einem der Ansprüche 8 bis 11, wobei die Dichtheitskontrolle (30, 40, 50, 60) im und/oder zwischen dem laufenden Produktionsbetrieb mehrfach ausgeführt wird und eine darauf basierende Trendanalyse für die auf Dichtheit kontrollierten Füll-Verschließ-Einheiten (1) erstellt wird.

13. Verfahren nach einem der vorigen Ansprüche, wobei ein CIP-Mittel vor der Dichtheitskontrolle (30, 40) durch die mit dem Aufsatz (14) abgedichtete Füll-Verschließ-Einheit (1) geleitet wird.

14. Füllmaschine (20) umlaufender Bauart mit mehreren gleichartigen Füll-Verschließ-Einheiten (1) und mit einer programmierbaren Steuerung (18),
wobei die Füll-Verschließ-Einheiten (1) jeweils umfassen: eine Druckkammer (2); einen jeweils darin beweglichen und zu einem die Druckkammer (2) umgebenden Gehäuse (5) jeweils mittels einer ersten und zweiten Dichtung (6, 7) abgedichteten Verschließer (3) und Produktzulauf (4); und eine in einem unteren Teilabschnitt (5a) des Gehäuses (5) sitzende dritte Dichtung (8), die zur Aufnahme und Abdichtung eines Mündungsbereichs (9a) und/oder eines daran anschließenden Halsbereichs und/oder daran anschließenden Schulterbereichs eines Behälters (9) mit Druckluft beaufschlagt werden kann, wobei die Füllmaschine (20) wenigstens einen Aufsatz (14) umfasst, welcher temporär auf dem unteren Teilabschnitt (5a) des Gehäuses (5) um einen darin ausgebildeten Dichtungssitz (5b) für die dritte Dichtung (8) abdichtend befestigt werden kann, um die Funktion der dritten Dichtung (8) und des eingesetzten Behälters (9) zu ersetzen,
und wobei die Steuerung (18) dazu ausgebildet ist, eine zugeordnete Überdruckquelle und/oder eine zugeordnete Unterdruckquelle sowie Ventile (11a, 12a, 15a, 16a, 17a) zum Öffnen und Schließen von Druckleitungen (11, 12) und Spülleitungen in zeitlich geeigneter Abfolge zum Durchführen von Testläufen gemäß dem Verfahren nach wenigstens einem der vorigen Ansprüche zu steuern.

## Claims

1. Method for tightness control (30, 40, 50, 60) of a filling-sealing unit (1) for containers (9), where a pressure chamber (2) formed at said filling-sealing unit (1) is sealed by way of a first seal (6) against a sealer (3) that is movable therein and by way of a second seal (7) against a product feeder (4), **characterized in that** a third seal (8) formed for sealing said pressure chamber (2) around a neck finish portion (9a) and/or a neck portion and/or a shoulder portion of said containers (9) is temporarily sealed from the outside with an attachment (14), thereby temporarily replacing the function of the third seal (8) and of an inserted container (9) with the sealing attachment (14), a positive pressure and/or negative pressure is generated in said pressure chamber (2), the pressure line (11, 12) used for this purpose is closed, and then a pressure profile (DV) in said pressure chamber (2) is measured, and that further a container (9) is introduced with its neck finish portion (9a), neck portion, and/or shoulder portion into said third seal (8), the same is acted upon with compressed air to enclose the neck finish portion / neck portion / shoulder portion with the third seal (8) in a liquid-tight and gas-tight manner in relation to positive pressures and/or negative pressures prevailing during the working operation, then a positive pressure and/or negative pressure is generated in said pressure chamber (2), said pressure line (11, 12) used for this purpose is closed, and then a pressure profile (DV) in said pressure chamber (2) is again measured.

2. Method according to claim 1, where further a test member (9) simulating said neck finish portion (9a), said neck portion, and/or said shoulder portion of said containers (9) is introduced into said third seal (8), a positive pressure and/or negative pressure is generated in said pressure chamber (2), said pressure line (11, 12) used for this purpose is closed, and then a pressure profile in said pressure chamber (2) is measured.

3. Method according to one of the preceding claims, where a positive pressure (ÜD) of at least 1 bar is generated, in particular of at least 3 bar.

4. Method according to one of the preceding claims, where said positive pressure (ÜD) is generated by introducing CO₂.

5. Method according to one of the preceding claims, where a negative pressure (UD) of 0.1 bar or less is generated.

6. Method according to one of the preceding claims, where said pressure profile (DV) is respectively measured over a period of time (ZD) of at least 0.5 s, in particular of at least 5 s.

7. Method according to at least one of the preceding claims, where tightness control (30, 40, 50, 60) is performed on all filling-sealing units (1) of a filling-sealing machine (20) of the rotary type.

8. Method according to claim 7, where tightness control (50, 60) is performed for every filling-sealing unit (1) at least twice consecutively with different containers (9).

9. Method according to claim 7 or 8, where said filling-sealing units (1) are moved to a corrective maintenance point (22) of said filling machine (20) in case they fail said tightness control (30, 40, 50, 60).

10. Method according to one of the claims 7 to 9, where said tightness control (50, 60) is performed with said containers (9) at a maximum rotational speed (DZ) of said filling machine (20) intended for the production operation.

11. Method according to one of the claims 7 to 10, where said tightness control (50, 60) is performed with said containers (9) at a reduced rotational speed (DZ) relative to normal production operation or at a standstill of said filling machine (20).

12. Method according to one of the claims 8 to 11, where tightness control (30, 40, 50, 60) is performed several times during and/or between the ongoing production operation and a trend analysis based thereon is created for said filling-sealing units (1) controlled for tightness.

13. Method according to one of the preceding claims, wherein a CIP agent is passed prior to tightness control (30, 40) through said filling-sealing unit (1) sealed with said attachment (14).

14. Filling machine (20) of the rotary type with several filling-sealing units (1) of the same kind and with a programmable control unit (18), wherein the filling-sealing units (1) each comprise: a pressure chamber (2); a sealer (3) and a product feeder (4) each being movable therein and sealed by way of a first and second seal (6, 7), respectively, against a housing (5) surrounding the pressure chamber (2); and a third seal (8) seated in a lower portion (5a) of the housing (5) and configured to be acted upon with compressed air for receiving and sealing a neck finish portion (9a) and/or an adjacent neck portion and/or an adjacent shoulder portion of a container (9), wherein the filing machine (20) comprises at least one attachment (14) that can be temporarily attached to the lower portion (5a) of the housing (5) around sealing seat (5b) formed therein in a sealing manner, to replace the function of the third seal (8) and of the inserted container (9), and wherein the control unit (18) is configured to control an associated positive pressure source and/or an associated negative pressure source as well as valves (11a, 12a, 15a, 17a) for opening and closing pressure lines (11, 12) and flushing lines in a temporally appropriate sequence for performing test runs following the method according to at least one of the preceding claims.

## Revendications

1. Procédé de contrôle d'étanchéité (30, 40, 50, 60) d'une unité de remplissage et de fermeture (1) pour récipient (9), une chambre de pression (2) formée sur l'unité de remplissage et de fermeture (1) étant rendue étanche par un premier joint d'étanchéité (6) en direction d'un obturateur (3) mobile dans cette chambre et par un deuxième joint d'étanchéité (7) en direction d'une arrivée de produit (4), **caractérisé en ce que** l'on rend temporairement étanche de l'extérieur, à l'aide d'une garniture (14), un troisième joint d'étanchéité (8) conçu pour rendre étanche la chambre de pression (2) autour d'une zone d'embouchure (9a) et/ou d'une zone de col et/ou d'une zone d'épaulement pour récipient (9), et **en ce que** l'on remplace ainsi temporairement la fonction du troisième joint d'étanchéité (8) et d'un récipient (9) inséré par la garniture (14) assurant l'étanchéité, on crée une surpression et/ou une dépression dans la chambre de pression (2), on ferme la conduite de pression (11, 12) utilisée à cet effet, et on mesure ensuite une courbe de pression (CP) dans la chambre de pression (2), et **en ce qu'**on introduit en outre un récipient (9) avec sa zone d'embouchure (9a), sa zone de col et/ou sa zone d'épaulement dans le troisième joint d'étanchéité (8), on alimente celui-ci en air comprimé, pour entourer la zone d'embouchure / la zone de col / la zone d'épaulement de manière étanche aux liquides et étanche aux gaz par rapport aux surpressions et/ou aux dépressions régnant en mode de travail avec le troisième joint d'étanchéité (8), puis on produit une surpression et/ou une dépression dans la chambre de pression (2), on ferme la conduite de pression (11, 12) utilisée à cet effet et on mesure ensuite à nouveau une courbe de pression (CP) dans la chambre de pression (2).

2. Procédé selon la revendication 1, dans lequel on introduit en outre un corps d'essai simulant la zone d'embouchure (9a), la zone de col et/ou la zone d'épaulement des récipients (9) dans le troisième joint d'étanchéité (8), on crée une surpression et/ou une dépression dans la chambre de pression (2), on ferme la conduite de pression (11, 12) utilisée à cet effet, et on mesure ensuite une courbe de pression dans la chambre de pression (2).

3. Procédé selon l'une quelconque des revendications précédentes, dans lequel une surpression (SPR) d'au moins 1 bar est générée, en particulier d'au moins 3 bars.

4. Procédé selon l'une quelconque des revendications précédentes, dans lequel la surpression (SPR) est générée par l'introduction de CO₂.

5. Procédé selon l'une quelconque des revendications précédentes, dans lequel une dépression (DEP) de 0,1 bar ou moins est générée.

6. Procédé selon l'une des revendications précédentes, dans lequel on mesure la courbe de pression (CP) respectivement sur une durée (D) d'au moins 0,5 s, en particulier d'au moins 5 s.

7. Procédé selon au moins l'une des revendications précédentes, dans lequel le contrôle d'étanchéité (30, 40, 50, 60) est effectué sur toutes les unités de remplissage et de fermeture (1) d'une machine de remplissage et de fermeture (20) de type rotatif.

8. Procédé selon la revendication 7, dans lequel le contrôle d'étanchéité (50, 60) est effectué au moins deux fois de suite par unité de remplissage et de fermeture (1) avec différents récipients (9).

9. Procédé selon les revendications 7 ou 8, dans lequel, en cas d'échec du contrôle d'étanchéité (30, 40, 50, 60), les unités de remplissage et de fermeture (1) sont respectivement amenées à un point de maintenance (22) de la machine de remplissage (20).

10. Procédé selon l'une des revendications 7 à 9, dans lequel le contrôle d'étanchéité (50, 60) est effectué avec les récipients (9) à une vitesse de rotation maximale (T/MN) de la machine de remplissage (20) prévue pour le mode de production.

11. Procédé selon l'une des revendications 7 à 10, dans lequel le contrôle d'étanchéité (50, 60) est effectué avec les récipients (9) à une vitesse de rotation (T/MN) réduite par rapport au mode de production normal et/ou à l'arrêt de la machine de remplissage (20).

12. Procédé selon l'une des revendications 8 à 11, dans lequel le contrôle d'étanchéité (30, 40, 50, 60) est effectué plusieurs fois pendant et/ou entre les opérations de production en cours et une analyse de tendance fondée sur cette analyse est établie pour les unités de remplissage et de fermeture (1) dont l'étanchéité est contrôlée.

13. Procédé selon l'une quelconque des revendications précédentes, dans lequel un agent de NEP est passé à travers l'unité de remplissage et de fermeture (1) rendue étanche par la garniture (14) avant le contrôle d'étanchéité (30, 40).

14. Machine de remplissage (20) de type rotatif avec plusieurs unités de remplissage et de fermeture (1) de même type et avec une commande programmable (18),
les unités de de remplissage et de fermeture (1) comprenant chacune : une chambre de pression (2) ; un obturateur (3) et une arrivée de produit (4) respectivement mobiles à l'intérieur et étanches par rapport à un boîtier (5) entourant la chambre de pression (2), respectivement au moyen d'un premier joint et d'un deuxième joint d'étanchéité (6, 7) ; et un troisième joint d'étanchéité (8) situé dans une section partielle inférieure (5a) du boîtier (5), qui peut être alimenté en air comprimé pour recevoir et étanchéifier une zone d'embouchure (9a) et/ou une zone de col qui s'y raccorde et/ou une zone d'épaulement qui s'y raccorde d'un récipient (9), la machine de remplissage (20) comprenant au moins une garniture (14) qui peut être fixé temporairement de manière étanche sur la partie inférieure (5a) du boîtier (5) autour d'un siège d'étanchéité (5b) pour le troisième joint d'étanchéité (8) formé dans celui-ci, afin de remplacer la fonction du troisième joint d'étanchéité (8) et du récipient (9) inséré,
et la commande (18) étant conçue pour commander une source de surpression associée et/ou une source de dépression associée ainsi que des soupapes (11a, 12a, 15a, 16a, 17a) pour l'ouverture et la fermeture de conduites de pression (11, 12) et de conduites de rinçage dans une séquence appropriée dans le temps pour l'exécution de cycles de test selon le procédé selon au moins l'une des revendications précédentes.
